(19) Europäisches Patentamt
European Patent Office
Office européen des brevets

(11) **EP 3 602 166 B1**

(12) **EUROPÄISCHE PATENTSCHRIFT**

(45) Veröffentlichungstag und Bekanntmachung des Hinweises auf die Patenterteilung:
**29.09.2021 Patentblatt 2021/39**

(21) Anmeldenummer: **18710344.5**

(22) Anmeldetag: **21.02.2018**

(51) Int Cl.:
*G02B 23/18* (2006.01)   *G02B 25/00* (2006.01)
*G02C 7/08* (2006.01)

(86) Internationale Anmeldenummer:
**PCT/EP2018/054294**

(87) Internationale Veröffentlichungsnummer:
**WO 2018/172010 (27.09.2018 Gazette 2018/39)**

(54) **OPTISCHE ANORDNUNG EINER BINOKULAREN LUPENBRILLE**

OPTICAL ARRANGEMENT OF BINOCULAR LOUPES

ENSEMBLE OPTIQUE D'UNE LUNETTE-LOUPE BINOCULAIRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **20.03.2017 DE 202017101607 U**

(43) Veröffentlichungstag der Anmeldung:
**05.02.2020 Patentblatt 2020/06**

(73) Patentinhaber: **Indivi Optics GmbH**
**35630 Ehringshausen (DE)**

(72) Erfinder: **MEUSER, Horst**
**65606 Villmar-Aumenau (DE)**

(74) Vertreter: **Wagner, Carsten**
**Patentanwaltskanzlei**
**Am Buchenhof 3**
**31303 Burgdorf (DE)**

(56) Entgegenhaltungen:
**EP-A1- 1 491 938     DE-A1- 3 039 734**
**GB-A- 191 125 531**

- **Herbert Gross ET AL: "Handbook of Optical Systems, Vol.3: Aberration Theory and Correction of Optical Systems" In: "Handbook of optical systems, Aberration theory and correction of optical systems", 1. Januar 2007 (2007-01-01), Wiley-VCH, Weinheim, DE, XP055258161, ISBN: 978-3-527-40379-0 Seiten 377-379, Seiten 377-379**

**Beschreibung**

Die Erfindung betrifft eine binokulare Lupenbrille, insbesondere Operationsbrille.

Binokulare Lupenbrillen sind allgemein bekannt. Sie bestehen aus einer Brille, die insbesondere als Korrektionsbrille ausgebildet sein kann, und einer zusätzlichen optischen Anordnung, die eine Lupenfunktion erfüllt. Die optische Anordnung weist zwei quer zu ihrer optischen Achse im Augenabstand angeordnete, gleichartige optische Systeme auf. Die optische Anordnung, die die optischen Systeme aufweist, kann dabei auf die Brillengläser der Brille aufgekittet (vgl. beispielsweise DE 1787396 und DE-AS-1289331) oder aufgeklebt sein (vgl. DE 10315197 B4). Es ist jedoch auch möglich, dass die optischen Systeme der optischen Anordnung in die Brillengläser eingesetzt sind, wie beispielsweise aus DE 1829210 bekannt.

Lupenbrillen sind ferner durch DE 3887788 T2 (entsprechend EP 0 300 384 B1), DE 100 31685 A1, DE 101 34896 C5, DE 103 15197 B4, DE 29605739 U1, DE 69938424 T2, DE 10 2005 054 444 und DE 20 2010 005 627 U1) bekannt.

Ferner sind Lupenbrillen durch DE-AS-1276363, DE-AS-1289331, DE 1399404, DE 1439627, DE 9303663 U1, DE 103 15179 B4, DE 198 60432 A1, DE 10 2004 029 057, DE 10 2005 043 306 B4, DE 20 2006 019 206 U1, DE 20 2011 004 180 U1, DE 812727, DE 1533006, DE 1621849 und US 5,249,002 bekannt.

Die optische Anordnung, die eine Lupenfunktion realisiert, entspricht dabei häufig dem Aufbau eines Galilei-Fernrohres, weshalb Lupenbrillen auch als Fernrohrbrillen bezeichnet werden (vgl. den Aufsatz "100 Jahre Fernrohrbrillen von Carl Zeiss - Meilensteine auf dem Weg zur neuzeitlichen Augenoptik, Teil 3", Autor: Heinz Gottlob, DOZ11-2009.)

Eine binokulare Lupenbrille mit den Merkmalen des Oberbegriffs des Anspruchs 1 ist durch GB 25531 A bekannt.

Durch DE 30 39 734 A1 ist ein galileisches Fernrohr bekannt.

Der Erfindung liegt die Aufgabe zugrunde, eine optische Anordnung einer binokularen Operationsbrille anzugeben, die kompakt und mit relativ geringem Gewicht ausgebildet ist und die gleichzeitig in Bezug auf Abbildungsfehler der optischen Systeme der optischen Anordnung gut korrigiert ist.

Diese Aufgabe wird durch die im Anspruch 1 angegebene Erfindung gelöst.

Die erfindungsgemäße optische Anordnung sieht eine Halterung vor, die in Gebrauchsposition der Operationsbrille mit einem Gestell einer Brille verbunden ist. An der Halterung sind zwei quer zu ihrer optischen Achse im Augenabstand angeordnete, gleichartige optische Systeme angeordnet, die die Lupenfunktion der Lupenbrille erfüllen.

Erfindungsgemäß ist jedes der optischen Systeme nach Art eines Galilei-Fernrohrs und als Achromat ausgebildet und weist ein Objektiv und ein Okular auf. Erfindungsgemäß ist bei jedem der optischen Systeme das Objektiv durch eine einzelne positive Linse in Meniskusform (Objektiv-Linse) gebildet, wobei das Okular ein negatives Verbundglied (Okular-Verbundglied) mit wenigstens zwei Linsen aufweist, wobei das Okular-Verbundglied eine Meniskusform hat.

Es hat sich überraschend gezeigt, dass aufgrund des erfindungsgemäßen Aufbaus der optischen Systeme die optische Anordnung relativ klein und mit relativ geringem Gewicht ausgebildet sein kann, wobei gleichzeitig Abbildungsfehler der optischen Systeme gut korrigiert sind.

Die optische Anordnung ermöglicht damit eine besonders hohe Abbildungsqualität, was insbesondere dann von Bedeutung ist, wenn die Lupenbrille beispielsweise als Operationsbrille ausgelegt ist und von einem Operateur während eines chirurgischen Eingriffs verwendet wird.

Erfindungsgemäß weist das Okular-Verbundglied wenigstens zwei Linsen auf. Die erfindungsgemäß vorgesehene und beabsichtigte optische Funktion des Okular-Verbundglieds kann erfindungsgemäß mit zwei Linsen realisiert werden. Falls entsprechend den jeweiligen Anforderungen gewünscht oder erforderlich, insbesondere im Hinblick auf eine weitere Verbesserung der Korrektion von Abbildungsfehlern, kann das Okular-Verbundglied jedes optischen Systems jedoch auch mehr als zwei Linsen aufweisen.

Vorteilhafte und zweckmäßige Weiterbildungen der Erfindung sind in den Unteransprüchen angegeben.

Die Erfindung wird nachfolgend anhand eines Ausführungsbeispiels unter Bezugnahme auf die beigefügte Zeichnung näher erläutert.

Es zeigt:

Fig. 1 in einer Perspektivansicht ein Ausführungsbeispiel einer erfindungsgemäßen optischen Anordnung einer binokularen Lupenbrille in Form einer Operationsbrille,

Fig. 2 in einer Perspektivansicht die erfindungsgemäße optische Anordnung gemäß Fig. 1 in Montageposition an einer Brille und

Fig. 3 einen Linsenschnitt der optischen Systeme der optischen Anordnung gemäß Fig. 1.

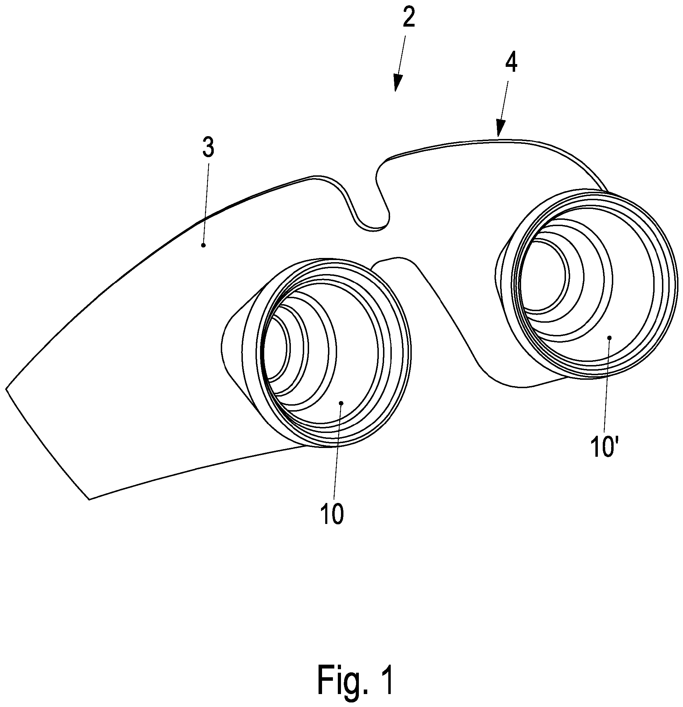

Unter Bezugnahme auf Fig. 1 bis Fig. 3 wird nachfolgend ein Ausführungsbeispiel einer erfindungsgemäßen optischen Anordnung einer binokularen Lupenbrille näher erläutert.

In Fig. 1 ist in einer Perspektivansicht ein Ausführungsbeispiel einer optischen Anordnung 2 einer binokularen Lupenbrille dargestellt, die eine Halterung 4 aufweist, die in Gebrauchsposition der Lupenbrille mit einem Gestell einer Brille verbunden ist. Die Halterung 4 ist als Vorsatz für eine Brille, beispielsweise eine Korrektionsbrille, ausgebildet und weist ein scheibenartiges Halteteil 6 aus einem transparenten Material auf. Die Halterung 4 ist zur lösbaren Verbindung mit einer Korrektionsbrille ausgebildet.

Die optische Anordnung 2 weist an der Halterung 4 quer zu ihrer optischen Achse im Augenabstand angeordnete gleichartige optische Systeme 10, 10' auf, wobei jedes der optischen Systeme 10, 10' nach Art eines Galilei-Fernrohrs und als Achromat aufgebaut ist. Bei dem dargestellten Ausführungsbeispiel sind die optischen Systeme Systeme 10, 10' in Ausnehmungen in dem Halteteil 6 eingesetzt.

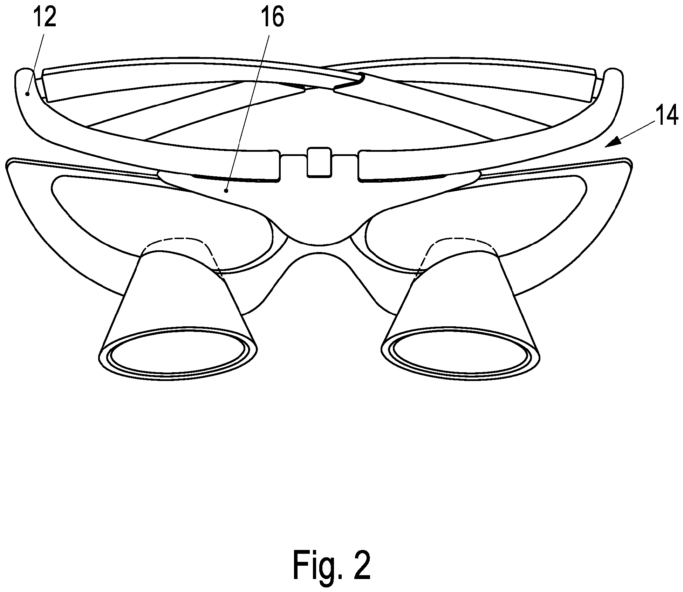

Fig. 2 zeigt die optische Anordnung 2 in Montageposition an einem Brillengestell 12 einer Korrektionsbrille 14. Mit dem Halteteil 6 der optischen Anordnung 2 ist ein Verbindungsteil 16 verbunden, mittels dessen die optische Anordnung 2 lösbar mit dem Brillengestell 12 verbunden ist. Falls entsprechend den jeweiligen Anforderungen gewünscht oder erforderlich, kann die Verbindung zwischen dem Verbindungselement 16 und dem Brillengestell 12 als Schwenkverbindung ausgestaltet sein, so dass die optische Anordnung 2 wahlweise in das Sichtfeld der Korrektionsbrille 14 eingeschwenkt werden kann.

Die optische Anordnung 2 bildet zusammen mit der Korrektionsbrille 14 eine Lupenbrille, die bei dem dargestellten Ausführungsbeispiel als Operationsbrille verwendet und von einem Operateur während eines chirurgischen Eingriffs getragen wird, um einen zu behandelnden Bereich vergrößert zu betrachten.

Wie aus Fig. 2 ersichtlich ist, sind die optischen Achsen der optischen Systeme 10, 10' entsprechend dem aufgrund des gewählten Optikdesigns vorgegebenen Betrachtungsabstandes zueinander geneigt.

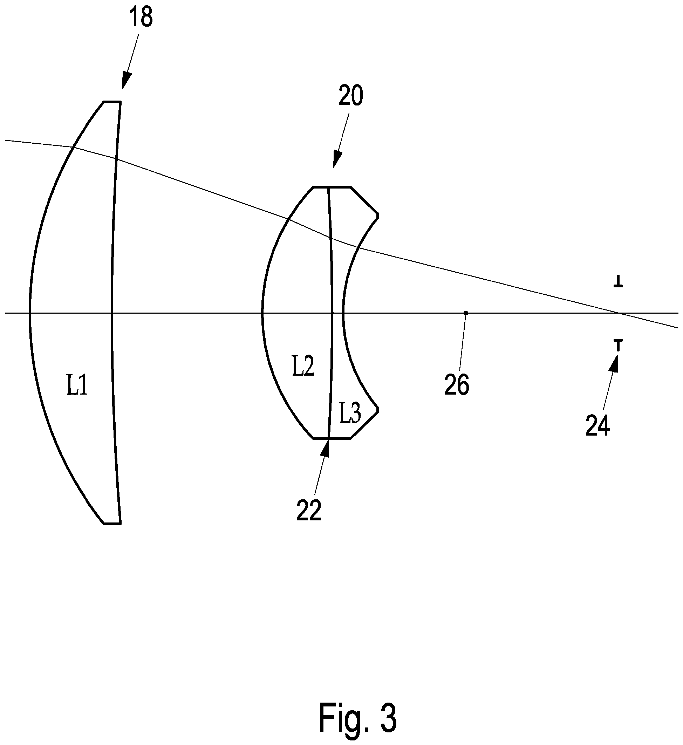

Fig. 3 zeigt einen Linsenschnitt durch die optischen Systeme 10, 10'. Jedes der optischen Systeme 10, 10' ist nach Art eines Galilei-Fernrohrs und als Achromat ausgebildet und weist ein Objektiv 18 und ein Okular 20 auf. Erfindungsgemäß ist bei jedem der optischen Systeme 10, 10' das Objektiv 18 durch eine einzelne positive Linse L1 in Meniskusform (Objektiv-Linse) gebildet. Erfindungsgemäß weist ferner das Okular 20 ein negatives Verbundglied 22 (Okular-Verbundglied) mit wenigstens zwei Linsen auf, wobei das Okular-Verbundglied 22 eine Meniskusform hat. Bei dem dargestellten Ausführungsbeispiel besteht das Okular-Verbundglied 22 aus zwei miteinander verkitteten Linsen (L2 und L3), wobei die in Lichtrichtung vordere Linse L2 des Okular-Verbundglieds 22 bikonvex und die in Lichtrichtung hintere Linse L3 bikonkav ausgebildet ist.

Die optischen Materialien der Linsen (L1, L2 und L3) sind bei dem dargestellten Ausführungsbeispiel wie folgt gewählt:

$$
\begin{array}{lll}
\text{L1:} & n(e) = 1.489 & v(e) = 70.2 \\
\text{L2:} & n(e) = 1.585 & v(e) = 50.6 \\
\text{L3} & n(e) = 1.910 & v(e) = 31.1
\end{array}
$$

Hierbei gilt:

n: Brechzahl
v: Abbe-Zahl

$$v(e) = [n(e) - 1] : [n(F') - n(C')]$$

*Fraunhoferlinien*

"e" = 546.0740 nm
"F'" = 479.9914 nm
"C'" = 643.8469 nm

Die erfindungsgemäße optische Anordnung 2 ermöglicht die Realisierung einer kompakten Lupenbrille mit geringem Gewicht, wobei das erfindungsgemäß verwendete Optikdesign der optischen Systeme eine ausgezeichnete Abbildungsqualität bietet.

Bei dem dargestellten Ausführungsbeispiel ist jedes der optischen Systeme 10, 10' derart ausgebildet, dass sich die Austrittspupille 24 entlang der optischen Achse 26 etwa 20mm hinter der letzten Fläche des Okularverbundglieds 22 befindet, die bei dem dargestellten Ausführungsbeispiel durch die in Lichtrichtung hintere Fläche der Linse L3 gebildet ist. Auf diese Weise ergeben sich im Hinblick auf die Verbindung der optischen Anordnung zwei mit dem Brillengestell 14 zusätzliche konstruktive Freiheiten.

**Patentansprüche**

1. Binokulare Lupenbrille, insbesondere Operationsbrille,

   mit einer optischen Anordnung (2),
   mit einer Halterung (4), die in Gebrauchsposition der Lupenbrille mit einem Gestell (12) einer Brille (14) verbunden ist,
   wobei die optische Anordnung zwei an der Halterung (4) quer zu ihrer optischen Achse im Augenabstand angeordnete gleichartige optische Systeme (10, 10') aufweist,
   wobei jedes der optischen Systeme (10, 10') nach Art eines Galilei-Fernrohrs und als Achromat ausgebildet ist und ein Objektiv (18) und ein Okular (20) aufweist,
   wobei bei jedem der optischen Systeme (10, 10')

   - das Objektiv (18) durch eine einzelne positive Linse (L1) in Meniskusform (Objektiv-Linse) gebildet ist und
   - das Okular ein negatives Verbundglied (Okular-Verbundglied (22)) mit wenigstens zwei Linsen (L2, L3) aufweist, wobei das Okular-Verbundglied (22) eine Meniskusform hat, wobei das Okular-Verbundglied (22) aus zwei miteinander verkitteten Linsen (L2, L3) besteht,

   **dadurch gekennzeichnet,**

   **dass** die in Lichtrichtung vordere Linse (L2) des Okular-Verbundglieds (22) bikonvex und die in Lichtrichtung hintere Linse (L3) bikonkav ausgebildet ist,
   **dass** die Objektiv-Linse (L1) aus einem optischen Material mit einer Brechzahl n(e) =1,489, und einer Abbe-Zahl v(e) =70,2, besteht,
   **dass** die in Lichtrichtung vordere Linse (L2) des Okular-Verbundglieds (22) aus einem optischen Material mit einer Brechzahl n(e) = 1,585, und einer Abbe-Zahl v(e) =50,6, besteht und
   **dass** die in Lichtrichtung hintere Linse (L3) des Okular-Verbundglieds (22) aus einem optischen Material mit einer Brechzahl n(e) =1,910, und einer Abbe-Zahl v(e) =31,1, besteht.

2. Optische Anordnung nach Anspruch 1, wobei die Halterung (4) zur lösbaren Verbindung mit einer Brille (14), insbesondere einer Korrektionsbrille, ausgebildet ist.

3. Optische Anordnung nach einem Anspruch 1 oder 2, wobei jedes der beiden optischen Systeme (10, 10') derart ausgebildet ist, dass sich die Austrittspupille (24) entlang der optischen Achse (26) in Lichtrichtung wenigstens 20mm oder etwa 20mm hinter der letzten optischen Fläche des Okular-Verbundglieds (22) befindet.

**Claims**

1. Binocular loupes, in particular surgical loupes, with an optical arrangement (2), a holder (4) connected to a frame (12) of spectacles (14) in the position of use of the loupes, wherein the optical arrangement has two similar optical systems (10, 10') arranged on the holder (4) with an eye spacing transversely to their optical axis, wherein each of the optical systems (10, 10') is formed in the manner of a Galilean telescope and as an achromatic lens and has an objective (18) and an eyepiece (20), wherein, in the case of each of the optical systems (10, 10'),

   - the objective (18) is formed by an individual positive lens (L1) with a meniscus form (objective lens) and
   - the eyepiece has a negative compound member (eyepiece compound member (22)) with at least two lenses (L2, L3), wherein the eyepiece compound member (22) has a meniscus form, wherein the eyepiece compound member (22) consists of two lenses (L2, L3) cemented together, **characterised in that** the front lens (L2) of the eyepiece compound member (22) in the direction of light is formed in a biconvex manner and the rear lens (L3) in the direction of light is formed in a biconcave manner, **in that** the objective lens (L1) consists of an optical material with a refractive index n(e) = 1489 and an Abbe number v(e) = 70.2, **in that** the front lens (L2) of the eyepiece compound member (22) in the direction of light consists of an optical material with a refractive index n(e) = 1585 and an Abbe number v(e) = 50.6 and **in that** the rear lens (L3) of the eyepiece compound member (22) in the direction of light consists of an optical material with a refractive index n(e) = 1910 and an Abbe number v(e) = 31.1.

2. Optical arrangement according to claim 1, wherein the holder (4) is formed to detachably connect to spectacles (14), in particular to corrective spectacles.

3. Optical arrangement according to any one of claims 1 or 2, wherein each of the two optical systems (10, 10') is formed in such manner that the exit pupil (24) is located along the optical axis (26) in the direction of light at least 20 mm or roughly 20 mm behind the last optical surface of the eyepiece compound member (22).

**Revendications**

1. Lunettes-loupes binoculaires, plus particulièrement lunettes d'opération,

   avec un dispositif optique (2),
   avec un support (4) qui est relié, dans la position d'utilisation des lunettes-loupes, avec un châssis (12) de lunette (14),
   dans lequel le dispositif optique comprend deux systèmes optiques (10, 10') similaires disposés sur le support (4) transversalement par rapport à leur axe optique à une distance interoculaire,
   dans lequel chacun des systèmes optiques (10, 10') est conçu à la manière d'une lunette de Galilée et d'un objectif achromatique et comprend un objectif (18) et un oculaire (20),
   dans lequel, pour chacun des systèmes optiques (10, 10'),

   - l'objectif (18) est constitué d'une seule lentille positive (L1) sous la forme d'un ménisque (lentille d'objectif) et
   - l'oculaire comprend un organe composite négatif (organe composite d'oculaire (22)) avec au moins deux lentilles (L2, L3), dans lequel l'organe composite d'oculaire (22) présente une forme de ménisque, dans lequel l'organe composite d'oculaire (22) est constitué de deux lentilles (L2, L3) scellées entre elles

   **caractérisées en ce que**

   la lentille avant (L2), dans la direction de la lumière, de l'organe composite d'oculaire (22) est biconvexe et la lentille arrière (L3), dans la direction de la lumière, est biconcave,
   la lentille d'objectif (L1) est constituée d'un matériau optique avec un indice de réfraction n(e) = 1,489 et un nombre d'Abbe v(e) = 70,2 et
   la lentille avant (L2), dans la direction de la lumière, de l'organe composite d'oculaire (22) est constituée d'un matériau optique avec un indice de réfraction n(e) = 1,585 et un nombre d'Abbe v(e) = 50,6 et
   la lentille arrière (L3), dans la direction de la lumière, de l'organe composite d'oculaire (22) est constituée d'un matériau optique avec un indice de réfraction n(e) = 1,910 et un nombre d'Abbe v(e) = 31,1.

2. Dispositif optique selon la revendication 1, dans lequel le support (4) est conçu pour la liaison amovible avec des lunettes (14), plus particulièrement des lunettes de correction.

3. Dispositif optique selon la revendication 1 ou 2, dans lequel chacun des deux systèmes optiques (10, 10') est conçu de façon à ce que la pupille de sortie (24) se trouve, le long de l'axe optique (26), dans la direction de la lumière, à au moins 20 mm ou environ 20 mm derrière la dernière surface optique de l'organe composite d'oculaire (22).

EP 3 602 166 B1



Fig. 1

Fig. 2

Fig. 3

## IN DER BESCHREIBUNG AUFGEFÜHRTE DOKUMENTE

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 1787396
- DE AS1289331 B
- DE 10315197 B4
- DE 1829210
- DE 3887788 T2
- EP 0300384 B1
- DE 10031685 A1
- DE 10134896 C5
- DE 29605739 U1
- DE 69938424 T2
- DE 102005054444
- DE 202010005627 U1
- DE AS1276363 B
- DE 1399404
- DE 1439627
- DE 9303663 U1
- DE 10315179 B4
- DE 19860432 A1
- DE 102004029057
- DE 102005043306 B4
- DE 202006019206 U1
- DE 202011004180 U1
- DE 812727
- DE 1533006
- DE 1621849
- US 5249002 A
- GB 25531 A
- DE 3039734 A1